# EUROPÄISCHE PATENTSCHRIFT

(11) **EP 0 652 396 B1**
(45) Veröffentlichungstag und Bekanntmachung des Hinweises auf die Patenterteilung: **11.06.1997**
(21) Anmeldenummer: 94116381.8
(22) Anmeldetag: 18.10.1994
(51) Int. Cl.: F16L 11/08

(54) **Kraftfahrzeugkühlwasserschlauch**
Hose for the cooling water of a motor vehicle
Tuyau souple pour l'eau de refroidissement d'un véhicule

(30) Priorität: 10.11.1993 DE 4338328
(43) Veröffentlichungstag der Anmeldung: 10.05.1995
(73) Patentinhaber: Continental Aktiengesellschaft, 30165 Hannover (DE)
(72) Erfinder: Keuper, Dieter, Dr., D-35789 Kalefeld (DE); Mroz, Michael, D-37154 Northeim (DE)

(56) Entgegenhaltungen:
- GB-A- 2 026 129
- US-A- 3 528 260
- US-A- 3 779 308
- DATABASE WPI Week 9434, Derwent Publications Ltd., London, GB; AN 94-275705 & JP-A-6 206 281 (KURASHIKI KAKO KK) 26. Juli 1994
- DATABASE WPI Week 9324, Derwent Publications Ltd., London, GB; AN 93-191581 & JP-A-5 117 408 (JAPAN SYNTHETIC RUBBER CO LTD) 14. Mai 1993

## Beschreibung

Die Erfindung betrifft einen Kraftfahrzeugkühlwasserschlauch gemäß dem Oberbegriff des Patentanspruchs 1.

Derartige Schläuche, z.B. US-A-3 779 308, werden in vielerlei Ausführungsformen zur Leitung und Verteilung des Kühlwassers im Kühlwasserkreislauf von Kraftfahrzeugmotoren eingesetzt. Sie unterliegen hohen Qualitätsanforderungen und müssen insbesondere eine hohe Druck- und Druckpulsfestigkeit bei extrem unterschiedlichen Temperaturen, eine hohe Chemikalienbeständigkeit gegenüber allen sowohl im Motorraum als auch im Kühlwasser eingesetzten Substanzen sowie Alterungsbeständigkeit über etliche Jahre gewährleisten.

Im Hinblick auf diese aus Sicherheitsgründen hohen Qualitätsstandards sah es der Fachmann bisher als äußerst problematisch an, durch Einsatz von Altgummi in derartigen Schläuchen einerseits wesentliche Kosteneinsparungen zu erzielen und andererseits einen nennenswerten Beitrag zur Schonung der Rohstoffressourcen und zum Abfallrecycling zu leisten.

Dies fachmännische Vorurteil wird gemäß der vorliegenden Erfindung durch einen gattungsgemäßen Kraftfahrzeugkühlwasserschlauch überwunden, der die im kennzeichnenden Teil des Patentanspruchs 1 genannten Merkmale aufweist. In den Ansprüchen 2 und 3 sind bevorzugte Ausführungsformen angegeben.

Überraschend hat sich gezeigt, daß die in dieser Weise ausgebildeten Schläuche den strengen Anforderungen der Kraftfahrzeugindustrie gerecht werden, so daß durch die vorliegende Erfindung ein wesentlicher Beitrag sowohl zur Kostensenkung als auch zur Rohstoffwiederverwendung und somit zur Umweltschonung erzielt wird.

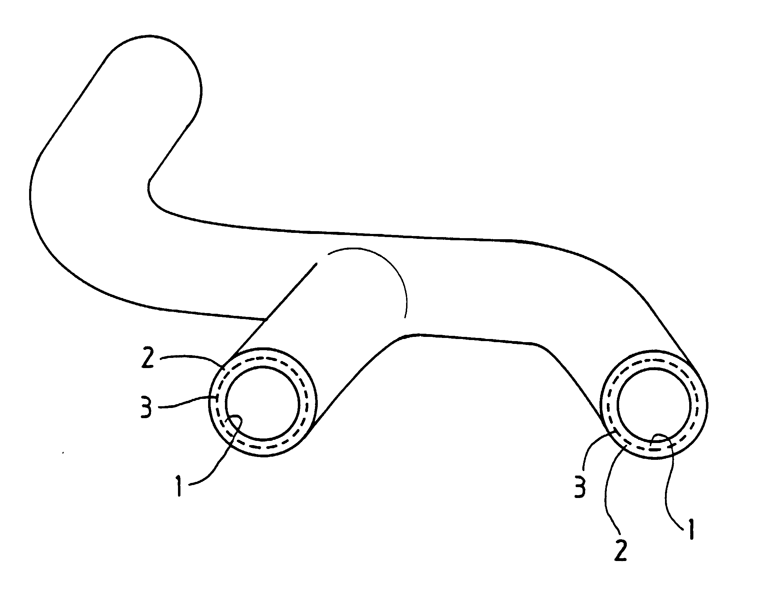

Die beigefügte Zeichnung illustriert den Gegenstand der vorliegenden Erfindung anhand eines schematisch wiedergegebenen Ausführungsbeispiels. Der dargestellte Kraftfahrzeugkühlwasserschlauch weist eine zweifach gekrümmte Form auf und besitzt zwischen seinen beiden Enden einen seitlichen Abzweig. Seine Wandung ist aus einer Innenschicht 1 und einer Außenschicht (2) sowie einer zwischen diesen Schichten angeordneten textilen Verstärkungseinlage 3 gebildet. Die beiden Schichten 1 und 2 können in an sich bekannter Weise unterschiedliche Kautschuktypen als Frischmischungsanteil - vorzugsweise Ethylen-Propylen-Kautschuk (EPDM) - enthalten, wenn z.B. bei der Innenschicht 1 die Chemikalienbeständigkeit und bei der Außenschicht 2 außerdem die Temperaturfestigkeit wesentliche Forderungen bilden. In jedem Fall ist wenigstens eine der beiden Schichten 1 und 2 mit dem erfindungsgemäßen hohen Anteil an feinstgemahlenem Altgummimehl ausgebildet.

Obwohl die vorliegende Erfindung ausdrücklich auf einen Kraftfahrzeugkühlwasserschlauch gerichtet ist, kann sie grundsätzlich auf andere, entsprechend aufgebaute Kraftfahrzeugschläuche, die entsprechenden Leistungs- und Qualitätsanforderungen unterliegen, angewandt werden.

## Patentansprüche

1. Kraftfahrzeugkühlwasserschlauch, dessen aus elastomeren Werkstoffen gebildete Wandung eine Innenschicht (1) und eine Außenschicht (2) aufweist, wobei - insbesondere zwischen diesen Schichten - eine textile Verstärkungseinlage (3) angeordnet sein kann, die Innenschicht (1) und/oder die Außenschicht (2) aus Elastomermischungen bestehen und die übliche Gewichtsanteile Beschleunigermischung enthalten, **dadurch gekennzeichnet**, daß in den Elastomermischungen 25 bis 50 Gew.-% des üblichen Elastomeranteils durch Gummimehl ersetzt sind, das durch physikalische Zerkleinerung von Altgummi mittels an sich bekannter Feinstmahlverfahren gebildet ist und dessen Teilchengröße im wesentlichen kleiner als 0,2 mm ist.

2. Kraftfahrzeugkühlwasserschlauch nach Anspruch 1, dadurch gekennzeichnet, daß die Teilchengröße des verwendeten Gummimehls im wesentlichen kleiner als 0,05 mm ist.

3. Kraftfahrzeugkühlwasserschlauch nach Anspruch 1 oder 2, dadurch gekennzeichnet, daß in den Elastomermischungen der Innen- und/oder Außenschicht (1, 2) 30 bis 40 Gew.-% des üblichen Elastomeranteils durch feinstgemahlenes Altgummimehl ersetzt sind.

## Claims

1. Automotive vehicle radiator hose, the wall of which is formed from elastomeric materials and has an inner layer (1) and an outer layer (2), a textile reinforcing member (3) being able to be disposed, more especially, between these layers, the inner layer (1) and/or the outer layer (2) comprising elastomeric mixtures and containing the conventional parts by weight of accelerator mixture, characterised in that, in the elastomeric mixtures, 25 to 50 % by wt. of the conventional elastomeric proportion are replaced by powdered rubber, which is formed by physically comminuting waste rubber by means of very finely grinding methods known per se, and the particle size of said rubber is substantially smaller than 0.2 mm.

2. Automotive vehicle radiator hose according to claim 1, characterised in that the particle size of the powdered rubber used is substantially smaller than 0.05 mm.

3. Automotive vehicle radiator hose according to claim 1 or 2, characterised in that, in the elastomeric mixtures of the inner layer and/or outer layer (1, 2), 30 to 40 % by wt. of the conventional elastomeric proportion are replaced by very finely ground powdered waste rubber.

## Revendications

1. Tuyau d'eau de refroidissement d'un véhicule automobile, dont la paroi, réalisée dans des matériaux élastomères, présente une couche intérieure (1) et une couche extérieure (2), une garniture de renfort (3) textile pouvant être placée, en particulier entre ces couches -, la couche intérieure (1) et/ou la couche extérieure (2) étant faites dans des mélanges d'élastomères et les parts en poids usuelles contiennent un mélange accélérateur, caractérisé en ce que dans les mélanges d'élastomères 25 à 50 % en poids de la part d'élastomère usuelle sont remplacés par de la farine de caoutchouc, qui est formée par fragmentation physique de vieux caoutchoucs au moyen de procédés de broyage fin connus et dont la taille des particules est sensiblement inférieure à 0,2 mm.

2. Tuyau d'eau de refroidissement d'un véhicule automobile selon la revendication 1, caractérisé en ce que la taille des particules de la farine de caoutchouc utilisée est sensiblement inférieure à 0,05 mm.

3. Tuyau d'eau de refroidissement d'un véhicule automobile selon la revendication 1 ou 2, caractérisé en ce que dans les mélanges d'élastomères de la couche intérieure et/ou de la couche extérieure (1, 2) 30 à 40 % en poids de la part d'élastomère usuelle sont remplacés par de la farine de vieux caoutchoucs très finement broyée.
